# EUROPÄISCHE PATENTSCHRIFT

(11) **EP 3 618 348 B1**
(45) Veröffentlichungstag und Bekanntmachung des Hinweises auf die Patenterteilung: **10.03.2021**
(21) Anmeldenummer: 18192060.4
(22) Anmeldetag: 31.08.2018
(51) Int. Cl.: H04L 9/32, H04L 9/08

(54) **VERFAHREN ZUM BETREIBEN EINES VERTEILTEN DATENBANKSYSTEMS, VERTEILTES DATENBANKSYSTEM UND INDUSTRIEAUTOMATISIERUNGSSYSTEM**
DISTRIBUTED DATABASE SYSTEM, INDUSTRY AUTOMATION SYSTEM AND METHOD FOR OPERATING A DISTRIBUTED DATABASE SYSTEM
PROCÉDÉ DE FONCTIONNEMENT D'UN SYSTÈME DE BANQUES DE DONNÉES DISTRIBUÉE, SYSTÈME DE BANQUES DE DONNÉES DISTRIBUÉE ET SYSTÈME D'AUTOMATISATION INDUSTRIELLE

(43) Veröffentlichungstag der Anmeldung: 04.03.2020
(73) Patentinhaber: Siemens Aktiengesellschaft, 80333 München (DE)
(72) Erfinder: Dichtl, Markus Dr., 80636 München (DE)

(56) Entgegenhaltungen:
- DE-A1-102017 202 002
- US-A1- 2018 144 156
- US-B1- 9 736 147

## Beschreibung

Die vorliegende Erfindung betrifft ein Verfahren zum Betreiben eines verteilten Datenbanksystems, wie zum Beispiel einer Blockkette (Blockchain) mit Hilfe vernetzter Knoten-Einrichtungen. Ein solches Datenbanksystem eignet sich insbesondere zum Einsatz in einem Industrieautomatisierungsnetzwerk. Um Dateneinträge oder Transaktionen innerhalb einer Blockkette durchführen und dokumentieren zu können, werden solche Einträge kryptographisch an Teilnehmer oder deren Identitäten in dem verteilten Datenbanksystem gekoppelt bzw. gebunden.

Bei der bekannten Blockkette Bitcoin, die eine Kryptowährung verwaltet, können diejenigen Teilnehmer oder Nutzer über geldwerte Einträge in der Bitcoin-Blockkette verfügen, denen ein geeigneter privater Schlüssel zugewiesen wurde. Das kryptographische Verfahren, die Datenbankeinträge den Personen bzw. Teilnehmern zuzuweisen, basiert auf Elliptische-Kurven-Kryptographie (Elliptic Curve Cryptography: ECC) mit einer bestimmten Schlüssellänge, nämlich 256 Bits. Die Schlüssellänge der eingesetzten ECDSA-Signaturen (Elliptic Curve Digital Signature Algorithm: ECDSA) wurde so gewählt, dass ein manipulierender Angriff unwahrscheinlich bis unmöglich ist. Da zukünftige Rechnerleistungen, die für Angriffe auf solche verteilten Datenbanksysteme genutzt werden können, nicht absehbar sind, ist fraglich, ob die Bitcoin-Blockkette langfristig mit einem geeigneten Sicherheitsniveau ausgestattet ist.

Für die Bitcoin-Blockkette ist vorgesehen, dass die letzten Bitcoins im Jahr 2130 entstehen sollen. Es ist mit großer Wahrscheinlichkeit anzunehmen, dass zu diesem Zeitpunkt elliptische Kurven mit einem 256-Bit-Modul keine angemessene Sicherheit mehr bieten werden. Die Zweifel an der langfristigen Sicherheit dieser Kurven werden verstärkt durch die aktuellen Fortschritte der Quantencomputer. Ein denkbarer Quantencomputer mit einer ausreichenden Zahl von Quanten-Bits kann alle üblichen, auf elliptischen Kurven beruhende Kryptoverfahren in Polynomzeit brechen.

Es ist insofern wünschenswert, die Sicherheit und Robustheit von verteilten Datenbanksystemen gegenüber kryptoanalytischen Angriffen möglichst hoch zu halten. Andererseits verlangsamen hohe Sicherheitsniveaus in der Regel den Betrieb der Datenbanksysteme.

Das Dokument DE 10 2017 202 002 A1 offenbart eine Verbesserung eines kryptografischen Schutzes einer Steuerungskommunikation, bei der ermittelt wird, ob benutzte Sicherheitsmechanismen ausreichend stark sind.

Das Dokument US 9,736,147 B1 offenbart ein Verschlüsselungsverfahren zur sicheren Datenübertragung, welches sich automatisch aktualisiert.

Vor diesem Hintergrund besteht eine Aufgabe der vorliegenden Erfindung darin, einen verbesserten Betrieb von verteilten Datenbanksystemen, insbesondere von Blockketten, zu ermöglichen.

Die Aufgabe wird durch die in den unabhängigen Ansprüchen angegebenen Merkmale gelöst. In den abhängigen Ansprüchen sind vorteilhafte Weiterbildungen der Erfindung dargestellt.

Es wird daher ein Verfahren zum Betreiben eines verteilten Datenbanksystems mit verteilten Knoteneinrichtungen zum Bereitstellen von miteinander verknüpften Datenblöcken vorgeschlagen. Die Datenblöcke dokumentieren an Teilnehmer zugewiesene Dateneinträge, wobei eine jeweilige Kopplung zwischen dem Teilnehmer und dem zugewiesenen Dateneintrag mit Hilfe eines kryptographischen Blockketten-Sicherheitsverfahrens erfolgt. Das kryptographische Blockketten-Sicherheitsverfahren hat dabei ein kryptographisches Blockketten-Sicherheitsniveau. Bei dem Verfahren werden die folgenden Schritte durchgeführt:
Bereitstellen einer kryptographischen Herausforderung auf der Basis des Blockketten-Sicherheitsverfahrens, wobei die kryptographische Herausforderung ein kryptographisches Herausforderungs-Sicherheitsniveau hat, welches niedriger ist als das Blockketten-Sicherheitsniveau; und
Erhöhen des Blockketten-Sicherheitsniveaus auf ein neues Blockketten-Sicherheitsniveau, falls eine Lösung der kryptographischen Herausforderung erkannt oder gefunden wird.

Eine kryptographische Bindung oder Kopplung zwischen dem Teilnehmer und dem Dateneintrag kann zum Beispiel über eine kryptographische Signatur erfolgen, die bestimmten Sicherheitsanforderungen genügt. Ein Beispiel für ein Sicherheitsniveau ist beispielsweise eine Schlüssellänge.

Als Sicherheitsniveau kann bei Sicherheitsverfahren, die auf einer geheimen Information, wie zum Beispiel einem kryptographischen privaten Schlüssel, basieren, die mittlere Anzahl der elementaren Operationen gelten, die der effizienteste bekannte Algorithmus benötigt, um die geheime Information zu ermitteln. Bei einem Sicherheitsniveau von 80 Bit, muss ein Angreifer 2⁸⁰ elementare Operationen durchführen, um den privaten Schlüssel zu finden. Man kann dann sagen, dass Sicherheitsniveau ist 80 Bit. Es sind auch andere Maße für das jeweilige Sicherheitsniveau, wie eine Schlüssellänge oder ein Parameter elliptischer Kurven, denkbar.

Die kryptographische Herausforderung wird insbesondere innerhalb des verteilten Datenbanksystems als lösbares Problem dokumentiert. Falls ein Teilnehmer oder eine Instanz die kryptographische Herausforderung löst, deutet dies auf ein unsicheres Herausforderungs-Sicherheitsniveau hin. Insofern kann die Lösung der kryptographischen Herausforderung als Hinweis verstanden werden, das Blockketten-Sicherheitsniveau zu erhöhen.

Eine Erhöhung erfolgt dabei insbesondere nicht durch eine Änderung des Blockketten-Sicherheitsverfahrens, sondern durch eine Erhöhung des Sicherheitsniveaus, beispielsweise einer Schlüssellänge.

In Ausführungsformen werden das Herausforderungs-Sicherheitsniveau und das Blockketten-Sicherheitsniveau so beabstandet, dass die kryptographische Herausforderung als zum Zeitpunkt der Bereitstellung als ein sicheres Blockketten-Sicherheitsverfahren gilt. Zum Beispiel kann ein Sicherheitsverfahren als sicher klassifiziert werden, wenn es bestimmten Richtlinien des Bundesamtes für Sicherheit in der Informationstechnik genügt.

In Ausführungsformen des Verfahrens wird die kryptographische Herausforderung in der Art eines Smart-Contracts für das bzw. in dem verteilten Datenbanksystem bereitgestellt. Die kryptographische Herausforderung kann beispielsweise ausführbaren Code als Dateneintrag darstellen, wobei ein Teilnehmer den jeweiligen Smart-Contract durch Einstellen einer Lösung für das kryptographische Problem der kryptographischen Herausforderung erfüllt.

Es ist möglich, dass bei der Erfüllung des Smart-Contracts durch einen Teilnehmer dem Teilnehmer eine Ressource in der Art einer Kryptowährung des verteilten Datenbanksystems zugewiesen wird. Insofern kann der Teilnehmer, der als erster eine Lösung der kryptographischen Herausforderung in dem verteilten Datensystem einstellt, eine Belohnung erhalten. Die Belohnung kann insbesondere eine Rechenleistung, Rechenkapazität oder andere Ressourcen des verteilten Datenbanksystems umfassen.

Insofern besteht für die Teilnehmer oder Nutzer des verteilten Datenbanksystems eine Motivation, die kryptographische Herausforderung zu lösen, wodurch in der Folge das Blockketten-Sicherheitsniveau erhöht wird. Dadurch kann insgesamt der Betrieb des verteilten Datenbanksystems sicherer gemacht werden. Denkbar ist zum Beispiel eine Belohnung durch Bitcoinähnliche Kryptowährungen.

Vorzugsweise ist die Menge der zugewiesenen Ressource, insbesondere ein bestimmter Betrag einer Kryptowährung, größer als der Betrag, welcher einer Knoten-Einrichtung im Rahmen einer Transaktionsbestätigung in einem Mining-Prozess zugewiesen wird. Insofern ist die Motivation, die kryptographische Herausforderung zu lösen, größer als die Ressource, wie die Kryptowährung, über konventionelles Kryptowährungs-Mining zu erhalten. Insbesondere automatisierte Angreifer oder auf künstlicher Intelligenz basierender Recheneinrichtungen, die programmiert sind, Ressourcen zu schöpfen, werden vorrangig die kryptografische Herausforderung angehen.

In Ausführungsformen verknüpft das Blockketten-Sicherheitsverfahren ein kryptographisches Schlüsselpaar miteinander, wobei die jeweiligen Schlüssel dem Blockketten-Sicherheitsniveau entsprechen, und wobei jedem Teilnehmer ein geltendes Schlüsselpaar zugeordnet ist. Alternativ oder zusätzlich kann das Blockketten-Sicherheitsverfahren mithilfe eines Signaturverfahrens mit Elliptische-Kurven-Kryptographie (ECC) implementiert werden, und das Blockketten-Sicherheitsniveau entspricht der Schlüssellänge für die ECC, insbesondere als Anzahl von Bits.

Bei ECC werden diskrete Logarithmusprobleme betrachtet und die Kurvenparameter festgelegt. Das Sicherheitsniveau einer ECC wird dabei im Wesentlichen durch die Schlüssellänge bestimmt. Auf ein verteiltes Datenbanksystem und die kryptographische Bindung von Dateneinträgen an Teilnehmer bezogen kann das Blockketten-Sicherheitsniveau die verwendete Schlüssellänge sein.

In Ausführungsformen umfasst das Verfahren beim Erhöhen des Blockketten-Sicherheitsniveaus den Schritt: für einen jeweiligen Teilnehmer, Austauschen des geltenden Schlüsselpaars mit einem neuen Schlüsselpaar, welches dem neuen Blockketten-Sicherheitsniveau entspricht.

Zum Austausch eines Schlüssels für einen Teilnehmer zum Erhöhen des Blockketten-Sicherheitsniveaus kann eine Austauschtransaktion in der verteilten Datenbank vorgenommen werden. Bei einer solchen Austauschtransaktion werden der geltende Schlüssel und der neue Schlüssel mit Hilfe einer Transaktionsanfrage dem Datenbanksystem zugeführt. Dabei wird die Austauschtransaktionsanfrage mit dem aktuellen Schlüssel signiert. Das heißt, vorzugsweise sind Austauschtransaktionsanfragen nur in einem vorbestimmten Zeitraum nach dem Erkennen der Lösung der kryptographischen Herausforderung erlaubt.

In Ausführungsformen des Verfahrens wird der Schritt durchgeführt: falls das Blockketten-Sicherheitsniveau erhöht wurde, Bereitstellen einer neuen kryptographischen Herausforderung auf der Basis des Blockketten-Sicherheitsverfahrens, wobei die neue kryptographische Herausforderung ein kryptographisches Herausforderungs-Sicherheitsniveau hat, welches höher ist als das vorherige Herausforderungs-Sicherheitsniveau und/oder des vorherigen Blockketten-Sicherheitsniveaus.

Es ist insofern möglich, das Blockketten-Sicherheitsniveau an den kryptoanalytischen Fortschritt anzupassen. Dadurch kann ein verteiltes Datenbanksystem langfristig ohne Sicherheitseinbußen betrieben werden.

Die vorgeschlagene Erhöhung des Blockketten-Sicherheitsniveaus während des Betriebs der Blockkette oder des verteilten Datenbanksystems ist insbesondere durch einen Smart-Contract möglich. Denkbar ist jedoch auch eine Implementierung der kryptographischen Herausforderung außerhalb des verteilten Datenbanksystems.

In Ausführungsformen des Verfahrens erfolgt ein Dateneintrag für einen Teilnehmer in dem verteilten Datenbanksystem mit Hilfe einer Transaktion. Jeder Teilnehmer innerhalb des verteilten Datenbanksystems wird mithilfe eines jeweiligen Blockketten-Identifizierungsdatums eindeutig identifiziert, und eine Transaktionsanfrage für den Teilnehmer umfasst zumindest das Blockketten-Identifizierungsdatum des Teilnehmers, welches mithilfe des kryptographischen Blockketten-Sicherheitsverfahrens signiert und/oder verschlüsselt wird. In Ausführungsformen können die Blockketten-Identifizierungsdaten von einem öffentlichen kryptographischen Schlüssel ableitbar sein.

Unter einem Teilnehmer kann beispielsweise eine reale oder juristische Person oder Entität verstanden werden, die an sie gebundene oder auf sie bezogenen Daten in dem verteilten Datenbanksystem abspeichern möchte oder abgespeichert werden. Ein jeweiliges Blockketten-Identifizierungsdatum identifiziert einen Teilnehmer innerhalb der Blockkette, insbesondere eindeutig.

Obwohl der Begriff "Blockketten-Identifizierungsdatum" benutzt wird, muss das verteilte Datenbanksystem nicht zwangsläufig in der Art einer Blockkette betrieben werden. Man kann allgemein von verteilten Knoten-Einrichtungen sprechen, die ein sogenanntes verteiltes Kontenbuch (Distributed Ledger) schaffen. Eine Transaktion kann beispielsweise darin bestehen, Daten, die an eine Blockkettenidentität gebunden sind, zu verändern.

In Ausführungsformen erfolgt ein Betrieb über die oben genannten Schritte hinaus gemäß einem bekannten Blockketten-Algorithmus. Denkbar sind zum Beispiel Ethereum-, IOTA- oder Bitcoin-Abwandlungen.

Es wird ferner ein verteiltes Datenbanksystem vorgeschlagen, welches mehrere Knoten-Einrichtungen zum Bereitstellen von miteinander verknüpften Datenblöcken umfasst, welche insbesondere in der Art einer Blockkette verknüpft sind. Jede Knoten-Einrichtung ist eingerichtet, gemäß einem vorgegebenen Blockkettenalgorithmus Transaktionen oder Dateneinträge zu dokumentieren, wobei der Blockkettenalgorithmus die Durchführung eines zuvor und im Folgenden beschriebenen Verfahrens durch die Knoten-Einrichtungen veranlasst.

Es wird insbesondere eine Knoten-Einrichtung vorgeschlagen, welche derart eingerichtet ist, dass sie als Knoten-Einrichtung in einem verteilten Datenbanksystem einsetzbar ist und gemäß dem Blockketten-Algorithmus arbeitet, wie es zuvor und im Folgenden beschrieben wird.

Weiterhin wird ein Industrie-Automatisierungsnetzwerk mit einem verteilten Datenbanksystem wie zuvor und im Folgenden beschrieben vorgeschlagen, wobei das Datenbanksystem zum Dokumentieren und Steuern von Transaktionen oder Dateneinträgen für Feldgeräte in dem Automatisierungsnetzwerk eingerichtet ist.

Es lassen sich insbesondere Feldgeräte, welche mit Adressen versehen sind, die Blockketten-Identifizierungsdaten entsprechen können, als Teilnehmer betrachten. Solche Feldgeräte können Sensordaten oder Steuerdaten erzeugen, welche mit Hilfe der Knoten-Einrichtungen verteilt abgespeichert werden. Da immer ein als sicher geltendes Blockketten-Sicherheitsverfahren zur Bindung der Transaktionen oder Dateneinträge an die Teilnehmer verwendet wird, kann die Sicherheit von derartigen Industrie-Automatisierungsnetzwerken verbessert werden. Die Feldgeräte können auch selbst Knoten-Einrichtungen in dem Datenbanksystem darstellen.

Die Technologie von Blockketten (engl. Blockchains) bzw. "Distributed Ledgers" ist aktuell eine intensiv diskutierte Technologie, die insbesondere als verteiltes Datenbanksystem realisiert sein kann. Neben Anwendungen für dezentrale Bezahlsysteme (z. B. Bitcoin) werden in der Finanzindustrie neue Anwendungsmöglichkeiten entwickelt. Insbesondere können Transaktionen zwischen Firmen dadurch ohne Vermittler bzw. Clearing-Stelle manipulationsgeschützt realisiert werden. Dies ermöglicht neue Geschäftsmodelle ohne einen vertrauenswürdigen Vermittler, es reduziert die Transaktionskosten, und es können flexibel neue digitale Dienste angeboten werden, wobei üblicherweise keine dafür speziell eingerichtete Infrastruktur und Vertrauensbeziehungen eingerichtet wird. Ein durch eine Blockchain geschützter Transaktionsdatensatz (oder kurz Transaktion) umfasst z. B. Programmcode, der auch als sogenannter "Smart-Contract" bezeichnet werden kann.

Die jeweilige Einheit, zum Beispiel ein Knoten, eine Recheneinheit oder Steuerungseinheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor oder als Steuerrechner eines Fahrzeuges ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Weiterhin wird ein Computerprogrammprodukt vorgeschlagen, welches auf einer oder mehrerer programmgesteuerten Einrichtungen die Durchführung des wie oben erläuterten Verfahrens veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Die für die vorgeschlagene Vorrichtung beschriebenen Ausführungsformen und Merkmale gelten für das vorgeschlagene Verfahren entsprechend.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt.

Unter einem Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, oder anderer Aspekte und/oder Teilaspekte der Erfindung realisiert.

Unter einer "Speichereinheit" oder "Speichermodul" und dergleichen kann im Zusammenhang mit der Erfindung beispielsweise ein flüchtiger Speicher in Form von Arbeitsspeicher (engl. Random-Access Memory, RAM) oder ein dauerhafter Speicher wie eine Festplatte oder ein Datenträger verstanden werden.

Unter einem "Modul" kann im Zusammenhang mit der Erfindung beispielsweise ein Prozessor und/oder eine Speichereinheit zum Speichern von Programmbefehlen verstanden werden. Beispielsweise ist der Prozessor speziell dazu eingerichtet, die Programmbefehle derart auszuführen, damit der Prozessor Funktionen ausführt, um das erfindungsgemäße Verfahren oder einen Schritt des erfindungsgemäßen Verfahrens zu implementieren oder realisieren. Ein Modul kann beispielsweise auch ein Knoten des verteilten Datenbanksystems sein, der beispielsweise die spezifischen Funktionen/Merkmale eines entsprechenden Moduls realisiert. Die jeweiligen Module können beispielsweise auch als separate bzw. eigenständige Module ausgebildet sein. Hierzu können die entsprechenden Module beispielsweise weitere Elemente umfassen. Diese Elemente sind beispielsweise eine oder mehrere Schnittstellen (z. B. Datenbankschnittstellen, Kommunikationsschnittstellen - z. B. Netzwerkschnittstelle, WLAN-Schnittstelle) und/oder eine Evaluierungseinheit (z. B. ein Prozessor) und/oder eine Speichereinheit. Mittels der Schnittstellen können beispielsweise Daten ausgetauscht (z. B. empfangen, übermittelt, gesendet oder bereitgestellt werden). Mittels der Evaluierungseinheit können Daten beispielsweise rechnergestützt und/oder automatisiert verglichen, überprüft, verarbeitet, zugeordnet oder berechnet werden. Mittels der Speichereinheit können Daten beispielsweise rechnergestützt und/oder automatisiert gespeichert, abgerufen oder bereitgestellt werden.

Unter "umfassen", insbesondere in Bezug auf Daten und/oder Informationen, kann im Zusammenhang mit der Erfindung beispielsweise ein (rechnergestütztes) Speichern einer entsprechenden Information bzw. eines entsprechenden Datums in einer Datenstruktur/Datensatz (die z. B. wiederum in einer Speichereinheit gespeichert ist) verstanden werden.

Unter "zuordnen", insbesondere in Bezug auf Daten und/oder Informationen, kann im Zusammenhang mit der Erfindung beispielsweise eine rechnergestützte Zuordnung von Daten und/oder Informationen verstanden werden. Beispielsweise wird einem ersten Datum hierzu mittels einer Speicheradresse oder eines eindeutigen Identifizierers (engl. Unique Identifier (UID)) ein zweites Datum zugeordnet, in dem z. B. das erste Datum zusammen mit der Speicheradresse oder des eindeutigen Identifizierers des zweiten Datums zusammen in einem Datensatz gespeichert wird.

Unter "bereitstellen", insbesondere in Bezug auf Daten und/oder Informationen, kann im Zusammenhang mit der Erfindung beispielsweise ein rechnergestütztes Bereitstellen verstanden werden. Das Bereitstellen erfolgt beispielsweise über eine Schnittstelle (z. B. eine Datenbankschnittstelle, eine Netzwerkschnittstelle, eine Schnittstelle zu einer Speichereinheit). Über diese Schnittstelle können beispielsweise beim Bereitstellen entsprechende Daten und/oder Informationen übermittelt und/oder gesendet und/oder abgerufen und/oder empfangen werden.

Unter "Bereitstellen" kann im Zusammenhang mit der Erfindung beispielsweise auch ein Laden oder ein Speichern, beispielsweise einer Transaktion mit entsprechenden Daten verstanden werden. Dies kann beispielsweise auf oder von einem Speichermodul erfolgen. Unter "Bereitstellen" kann beispielsweise auch ein Übertragen (oder ein Senden oder ein Übermitteln) von entsprechenden Daten von einem Knoten zu einem anderen Knoten der Blockkette oder des verteilten Datenbanksystems (bzw. deren Infrastruktur) verstanden werden.

Unter "Smart-Contract-Prozess" kann im Zusammenhang mit der Erfindung insbesondere ein Ausführen eines Programmcodes (z. B. der Steuerbefehle) in einem Prozess durch das verteilte Datenbanksystem bzw. deren Infrastruktur verstanden werden.

Unter einer "Prüfsumme", beispielsweise eine Datenblockprüfsumme, eine Datenprüfsumme, eine Knotenprüfsumme, eine Transaktionsprüfsumme, eine Verkettungsprüfsumme oder dergleichen, kann im Zusammenhang mit der Erfindung beispielsweise eine kryptographische Prüfsumme oder kryptographischer Hash bzw. Hashwert verstanden werden, die insbesondere mittels einer kryptographischen Hashfunktion über einen Datensatz und/oder Daten und/oder eine oder mehrere der Transaktionen und/oder einem Teilbereich eines Datenblocks (z. B. der Block-Header eines Blocks einer Blockkette oder Datenblock-Header eines Datenblocks des verteilten Datenbanksystems oder nur einem Teil der Transaktionen eines Datenblocks) gebildet oder berechnet werden. Bei einer Prüfsumme kann es sich insbesondere um eine Prüfsumme/n oder Hashwert/e eines Hash-Baumes (z. B. Merkle Baum, Patricia-Baum) handeln. Weiterhin kann darunter insbesondere auch eine digitale Signatur oder ein kryptographischer Nachrichtenauthentisierungscode verstanden werden. Mittels der Prüfsummen kann beispielsweise auf unterschiedlichen Ebenen des Datenbanksystems ein kryptographischer Schutz/Manipulationsschutz für die Transaktionen und die darin gespeicherten Daten(sätze) realisiert werden. Ist beispielsweise eine hohe Sicherheit gefordert, werden beispielsweise die Prüfsummen auf Transaktionsebene erzeugt und überprüft. Ist eine weniger hohe Sicherheit gefordert, werden beispielsweise die Prüfsummen auf Blockebene (z. B. über den ganzen Datenblock oder nur über einen Teil des Datenblocks und/oder einen Teil der Transaktionen) erzeugt und überprüft.

Unter einer "Datenblockprüfsumme" kann im Zusammenhang mit der Erfindung eine Prüfsumme verstanden werden, die beispielsweise über einen Teil oder alle Transaktionen eines Datenblocks berechnet wird. Ein Knoten kann dann beispielsweise die Integrität/Authentizität des entsprechenden Teils eines Datenblocks mittels der Datenblockprüfsumme prüfen/feststellen. Zusätzlich oder alternativ kann die Datenblockprüfsumme insbesondere auch über Transaktionen eines vorhergehenden Datenblocks/Vorgänger-Datenblocks des Datenblocks gebildet worden sein. Die Datenblockprüfsumme kann dabei insbesondere auch mittels eines Hash-Baumes, beispielsweise einem Merkle Baum [1] oder einem Patricia-Baum, realisiert werden, wobei die Datenblockprüfsumme insbesondere die Wurzel-Prüfsumme des Merkle-Baumes bzw. eines Patricia-Baumes bzw. eines binären Hashbaumes ist. Insbesondere werden Transaktionen mittels weiterer Prüfsummen aus dem Merkle-Baum bzw. Patricia-Baum abgesichert (z. B. unter Verwendung der Transaktionsprüfsummen), wobei insbesondere die weiteren Prüfsummen Blätter im Merkle-Baum bzw. Patricia-Baum sind. Die Datenblockprüfsumme kann damit beispielsweise die Transaktionen absichern, indem die Wurzel-Prüfsumme aus den weiteren Prüfsummen gebildet wird. Die Datenblockprüfsumme kann insbesondere für Transaktionen eines bestimmten Datenblocks der Datenblöcke berechnet werden. Insbesondere kann eine solche Datenblockprüfsumme in einen nachfolgenden Datenblock des bestimmten Datenblocks eingehen, um diesen nachfolgenden Datenblock beispielsweise mit seinen vorhergehenden Datenblöcken zu verketten und insbesondere damit eine Integrität des verteilten Datenbanksystems prüfbar zu machen. Hierdurch kann die Datenblockprüfsumme beispielsweise die Funktion der Verkettungsprüfsumme übernehmen oder in die Verkettungsprüfsumme eingehen. Der Header eines Datenblocks (z. B. eines neuen Datenblocks oder des Datenblocks für den die Datenblockprüfsumme gebildet wurde) kann beispielsweise die Datenblockprüfsumme umfassen.

Unter "Transaktionsprüfsumme" kann im Zusammenhang mit der Erfindung eine Prüfsumme verstanden werden, die insbesondere über eine Transaktion eines Datenblocks gebildet wird. Zusätzlich kann beispielsweise eine Berechnung einer Datenblockprüfsumme für einen entsprechenden Datenblock beschleunigt werden, da hierfür beispielsweise bereits berechnete Transaktionsprüfsummen gleich als Blätter z. B. eines Merkle-Baumes verwendet werden können.

Unter einer "Verkettungsprüfsumme" kann im Zusammenhang mit der Erfindung eine Prüfsumme verstanden werden, die insbesondere für einen jeweiligen Datenblock des verteilten Datenbanksystems unter Zuhilfenahme des vorhergehenden Datenblocks des verteilten Datenbanksystems ermittelt wird oder auf einen solchen referenziert wird (in der Fachliteratur insbesondere häufig als "previous block hash" bezeichnet) [1]. Hierfür wird insbesondere für den entsprechenden vorhergehenden Datenblock eine entsprechende Verkettungsprüfsumme gebildet. Als Verkettungsprüfsumme kann beispielsweise eine Transaktionsprüfsumme oder die Datenblockprüfsumme eines Datenblocks (also ein vorhandener Datenblock des verteilten Datenbanksystems) verwendet werden, um einen neuen Datenblock mit einem (vorhandenen) Datenblock des verteilten Datenbanksystems zu verketten. Es ist beispielsweise aber auch möglich, dass eine Prüfsumme über einen Header des vorhergehenden Datenblocks oder über den gesamten vorhergehenden Datenblock gebildet wird und als Verkettungsprüfsumme verwendet wird. Dies kann beispielsweise auch für mehrere oder alle vorhergehenden Datenblöcke berechnet werden. Es ist beispielsweise auch realisierbar, dass über den Header eines Datenblocks und der Datenblockprüfsumme die Verkettungsprüfsumme gebildet wird. Ein jeweiliger Datenblock des verteilten Datenbanksystems umfasst jedoch vorzugsweise jeweils eine Verkettungsprüfsumme, die für einen vorhergehenden Datenblock, insbesondere noch bevorzugter den direkt vorhergehenden Datenblock, des jeweiligen Datenblockes berechnet wurde bzw. sich auf diesen beziehen. Es ist beispielsweise auch möglich, dass eine entsprechende Verkettungsprüfsumme auch nur über einen Teil des entsprechenden Datenblocks (z. B. vorhergehenden Datenblock) gebildet wird. Hierdurch kann beispielsweise ein Datenblock realisiert werden, der einen integritätsgeschützten Teil und einen ungeschützten Teil umfasst. Damit ließe sich beispielsweise ein Datenblock realisieren, dessen integritätsgeschützter Teil unveränderlich ist und dessen ungeschützter Teil auch noch später verändert werden kann. Unter integritätsgeschützt ist dabei insbesondere zu verstehen, dass eine Veränderung von integritätsgeschützten Daten mittels einer Prüfsumme feststellbar ist.

Die Daten, die beispielsweise in einer Transaktion eines Datenblocks gespeichert werden, können insbesondere auf unterschiedliche Weise bereitgestellt werden. Anstelle der Daten, z. B. Nutzerdaten wie Messdaten oder Daten/Eigentumsverhältnisse zu Assets, kann beispielsweise eine Transaktion eines Datenblocks nur die Prüfsumme für diese Daten umfassen. Die entsprechende Prüfsumme kann dabei auf unterschiedliche Weise realisiert werden. Dies kann z. B. eine entsprechende Datenblockprüfsumme eines Datenblocks (mit den entsprechenden Daten) einer anderen Datenbank oder des verteilten Datenbanksystems sein, eine Transaktionsprüfsumme eines Datenblocks mit den entsprechenden Daten (des verteilten Datenbanksystems oder einer anderen Datenbank) oder eine Datenprüfsumme, die über die Daten gebildet wurde.

Zusätzlich kann die entsprechende Transaktion noch einen Verweis oder eine Angabe zu einem Speicherort (z. B. eine Adresse eines Fileservers und Angaben, wo die entsprechenden Daten auf dem Fileserver zu finden sind; oder eine Adresse einer anderen verteilten Datenbank, welche die Daten umfasst) umfassen. Die entsprechenden Daten könnten dann beispielsweise auch in einer weiteren Transaktion eines weiteren Datenblocks des verteilten Datenbanksystems bereitgestellt werden (z. B. wenn die entsprechenden Daten und die zugehörigen Prüfsummen in unterschiedlichen Datenblöcken umfasst sind). Es ist beispielsweise aber auch denkbar, dass diese Daten über einen anderen Kommunikationskanal (z. B. über eine andere Datenbank und/oder einen kryptographisch gesicherten Kommunikationskanal) bereitgestellt werden.

Auch kann beispielsweise zusätzlich zu der Prüfsumme ein Zusatzdatensatz (z. B. ein Verweis oder eine Angabe zu einem Speicherort) in der entsprechenden Transaktion abgelegt sein, der insbesondere einen Speicherort angibt, wo die Daten abgerufen werden können. Das ist insbesondere dahingehend vorteilhaft, um eine Datengröße der Blockkette oder des verteilten Datenbanksystems möglichst gering zu halten.

Unter "sicherheitsgeschützt" kann im Zusammenhang mit der Erfindung beispielsweise ein Schutz verstanden werden, der insbesondere durch ein kryptographisches Verfahren realisiert wird. Beispielsweise kann dies durch eine Nutzung des verteilten Datenbanksystems für das Bereitstellen oder Übertragen oder Senden von entsprechenden Daten/Transaktionen realisiert werden. Dies wird vorzugsweise durch eine Kombination der verschiedenen (kryptographischen) Prüfsummen erreicht, indem diese insbesondere synergetisch zusammenwirken, um beispielsweise die Sicherheit bzw. die kryptographische Sicherheit für die Daten der Transaktionen zu verbessern. Mit anderen Worten kann insbesondere unter "sicherheitsgeschützt" im Zusammenhang mit der Erfindung auch "kryptographisch geschützt" und/oder "manipulationsgeschützt" verstanden werden, wobei "manipulationsgeschützt" auch als "integritätsgeschützt" bezeichnet werden kann.

Unter "Verketten der/von Datenblöcken eines verteilten Datenbanksystems" kann im Zusammenhang mit der Erfindung beispielsweise verstanden werden, dass Datenblöcke jeweils eine Information (z. B. Verkettungsprüfsumme) umfassen, die auf einen anderen Datenblock oder mehrere andere Datenblöcke des verteilten Datenbanksystems verweisen bzw. diese referenzieren [1] [4] [5] .

Unter "Einfügen in das verteilte Datenbanksystem" und dergleichen kann im Zusammenhang mit der Erfindung beispielsweise verstanden werden, dass insbesondere eine Transaktion bzw. die Transaktionen oder ein Datenblock mit seinen Transaktionen an einen oder mehrere Knoten eines verteilten Datenbanksystems übermittelt wird. Werden diese Transaktionen beispielsweise erfolgreich validiert (z. B. durch den/die Knoten), werden diese Transaktionen insbesondere als neuer Datenblock mit mindestens einem vorhandenen Datenblock des verteilten Datenbanksystems verkettet [1][4][5]. Hierzu werden die entsprechenden Transaktionen beispielsweise in einem neuen Datenblock gespeichert. Insbesondere kann dieses Validieren und/oder Verketten durch einen vertrauenswürdigen Knoten (z. B. einen Mining Node, einen Blockketten-Orakel oder eine Blockketten-Plattform) erfolgen. Insbesondere kann dabei unter einer Blockketten-Plattform eine Blockkette als Dienst (engl. Blockkette als Service) verstanden werden, wie dies insbesondere durch Microsoft oder IBM vorgeschlagen wird. Insbesondere können ein vertrauenswürdiger Knoten und/oder ein Knoten jeweils eine Knoten-Prüfsumme (z. B. eine digitale Signatur) in einem Datenblock hinterlegen (z. B. in denen von ihnen validierten und erzeugten Datenblock, der dann verkettet wird), um insbesondere eine Identifizierbarkeit des Erstellers des Datenblockes zu ermöglichen und/oder eine Identifizierbarkeit des Knotens zu ermöglichen. Dabei gibt diese Knoten-Prüfsumme an, welcher Knoten beispielsweise den entsprechenden Datenblock mit mindestens einem anderen Datenblock des verteilten Datenbanksystems verkettet hat.

Unter "Transaktion" bzw. "Transaktionen" können im Zusammenhang mit der Erfindung beispielsweise ein Smart-Contract [4] [5], eine Datenstruktur oder ein Transaktionsdatensatz verstanden werden, der insbesondere jeweils eine der Transaktionen oder mehrere Transaktionen umfasst. Unter "Transaktion" bzw. "Transaktionen" können im Zusammenhang mit der Erfindung beispielsweise auch die Daten einer Transaktion eines Datenblocks einer Bockkette (engl. Blockchain) verstanden werden. Eine Transaktion kann insbesondere einen Programmcode umfassen, der beispielsweise einen Smart-Contract realisiert. Beispielsweise können im Zusammenhang mit der Erfindung unter Transaktion auch eine Steuertransaktion und/oder Bestätigungstransaktion verstanden werden. Alternativ kann eine Transaktion beispielsweise eine Datenstruktur sein, die Daten speichert (z. B. die Steuerbefehle und/oder Vertragsdaten und/oder andere Daten wie Videodaten, Nutzerdaten, Messdaten etc.).

Insbesondere ist unter "Speichern von Transaktionen in Datenblöcken", "Speichern von Transaktionen" und dergleichen ein direktes Speichern oder indirektes Speichern zu verstehen. Unter einem direkten Speichern kann dabei beispielsweise verstanden werden, dass der entsprechende Datenblock (des verteilten Datenbanksystems) oder die entsprechende Transaktion des verteilten Datenbanksystems) die jeweiligen Daten umfasst. Unter einem indirekten Speichern kann dabei beispielsweise verstanden werden, dass der entsprechende Datenblock oder die entsprechende Transaktion eine Prüfsumme und optional einen Zusatzdatensatz (z. B. einen Verweis oder eine Angabe zu einem Speicherort) für entsprechende Daten umfasst und die entsprechenden Daten somit nicht direkt in dem Datenblock (oder der Transaktion) gespeichert sind (also stattdessen nur eine Prüfsumme für diese Daten). Insbesondere können beim Speichern von Transaktionen in Datenblöcken diese Prüfsummen beispielsweise validiert werden, so wie dies beispielsweise unter "Einfügen in das verteilte Datenbanksystem" erläutert ist.

Unter einem "Programmcode" (z. B. ein Smart-Contract) kann im Zusammenhang mit der Erfindung beispielsweise ein Programmbefehl oder mehrere Programmbefehle verstanden werden, die insbesondere in einer oder mehreren Transaktionen gespeichert sind. Der Programmcode ist insbesondere ausführbar und wird beispielsweise durch das verteilte Datenbanksystem ausgeführt. Dies kann beispielsweise mittels einer Ausführungsumgebung (z. B. einer virtuellen Maschine) realisiert werden, wobei die Ausführungsumgebung bzw. der Programmcode vorzugsweise Turing-vollständig sind. Der Programmcode wird vorzugsweise durch die Infrastruktur des verteilten Datenbanksystems ausgeführt [4][5]. Dabei wird beispielsweise eine virtuelle Maschine durch die Infrastruktur des verteilten Datenbanksystems realisiert.

Unter einem "Smart-Contract" kann im Zusammenhang mit der Erfindung beispielsweise ein ausführbarer Programmcode verstanden werden [4][5] (siehe insbesondere Definition "Programmcode"). Der Smart-Contract ist vorzugsweise in einer Transaktion eines verteilten Datenbanksystems (z. B. eine Blockkette) gespeichert, beispielsweise in einem Datenblock des verteilten Datenbanksystems. Beispielsweise kann der Smart-Contract auf die gleiche Weise ausgeführt werden, wie dies bei der Definition von "Programmcode", insbesondere im Zusammenhang mit der Erfindung, erläutert ist.

Unter "Proof-of-Work-Nachweis" kann im Zusammenhang mit der Erfindung beispielsweise ein Lösen einer rechenintensiven Aufgabe verstanden werden, die insbesondere abhängig vom Datenblock-Inhalt/Inhalt einer bestimmten Transaktion zu lösen ist [1][4][5]. Eine solche rechenintensive Aufgabe wird beispielsweise auch als kryptographisches Puzzle bezeichnet.

Unter einem "verteilten Datenbanksystem", das beispielsweise auch als verteilte Datenbank bezeichnet werden kann, kann im Zusammenhang mit der Erfindung beispielsweise eine dezentral verteilte Datenbank, eine Blockkette (engl. Blockchain), ein Distributed Ledger, ein verteiltes Speichersystem, ein Distributed Ledger Technology (DLT) Based System (DLTS), ein revisionssicheres Datenbanksystem, eine Cloud, ein Cloud-Service, eine Blockkette in einer Cloud oder eine Peer-to-Peer Datenbank verstanden werden. Es können auch beispielsweise unterschiedliche Implementierungen einer Blockkette oder eines DLTS verwendet werden. Es kommt z. B. eine Blocckette oder ein System auf Basis der DLT, das mit einem Directed Acylic Graph (DAG), kryptographischen Puzzles, Hashgraphen oder einer Kombination aus den genannten Implementierungsvarianten [6][7] arbeitet. Auch können beispielsweise unterschiedliche Konsensusverfahren (engl. Consensus Algorithms) implementiert werden. Dies kann beispielsweise ein Konsensusverfahren mittels eines kryptographischen Puzzles, Gossip-about-Gossip, Virtual Voting oder eine Kombination der genannten Verfahren sein (z. B. Gossip-about-Gossip kombiniert mit Virtual Voting) [6][7]. Es sind insbesondere Proof-of-Stake, Proof-of-Authority oder Proof-of-State Varianten neben der Proof-of-Work-Implementierung zur Transaktionsvalidierung bekannt. Wird beispielsweise eine Blockkette verwendet, so kann diese insbesondere mittels einer Bitcoinbasierten Realisierung oder einer Ethereum-basierten Realisierung umgesetzt werden [1][4][5]. Unter einem "verteilten Datenbanksystem" kann beispielsweise auch ein verteiltes Datenbanksystem verstanden werden, von dem zumindest ein Teil seiner Knoten und/oder Geräte und/oder Infrastruktur durch eine Cloud realisiert sind. Beispielsweise sind die entsprechenden Komponenten als Knoten/Geräte in der Cloud (z. B. als virtueller Knoten in einer virtuellen Maschine) realisiert. Dies kann beispielsweise mittels VM-Ware, Amazon Web Services oder Microsoft Azure erfolgen. Aufgrund der hohen Flexibilität der erläuterten Implementierungsvarianten, können insbesondere auch Teilaspekte der genannten Implementierungsvarianten miteinander kombiniert werden, indem z. B. ein Hashgraph als Blockkette verwendet wird, wobei die Blockkette selbst z. B. auch blocklos sein kann.

Wird beispielsweise ein Directed Acylic Graph (DAG) verwendet sind insbesondere Transaktionen oder Blöcke oder Knoten des Graphen miteinander über gerichtete Kanten miteinander verbunden. Dies bedeutet insbesondere, dass (alle) Kanten (immer) die gleiche Richtung haben, ähnlich wie dies z. B. bei der Zeit ist. Durch den eindeutigen, azyklischen Verlauf der Kanten wird die zeitliche Aufeinanderfolge der beteiligten Transaktionen eindeutig und beweissicher festgelegt. Azyklisch bedeutet dabei insbesondere, dass es keine Schleifen bei einem Durchlaufen des Graphen gibt.

Bei dem verteilten Datenbanksystem kann es sich beispielsweise um ein öffentliches verteiltes Datenbanksystem (z. B. eine öffentliche Blockkette) oder ein geschlossenes (oder privates) verteiltes Datenbanksystem (z. B. eine private Blockkette) handeln.

Handelt es sich beispielsweise um ein öffentliches verteiltes Datenbanksystem, bedeutet dies, dass neue Knoten und/oder Geräte ohne Berechtigungsnachweise oder ohne Authentifizierung oder ohne Anmeldeinformationen oder ohne Credentials dem verteilten Datenbanksystem beitreten können bzw. von diesem akzeptiert werden. Insbesondere können in einem solchen Fall die Betreiber der Knoten und/oder Geräte anonym bleiben.

Handelt es sich bei dem verteilten Datenbanksystem beispielsweise um ein geschlossenes verteiltes Datenbanksystem, benötigen neue Knoten und/oder Geräte beispielsweise einen gültigen Berechtigungsnachweis und/oder gültige Authentifizierungsinformationen und/oder gültige Credentials und/oder gültige Anmeldeinformationen, um dem verteilten Datenbanksystem beitreten können bzw. von diesem akzeptiert zu werden.

Bei einem verteilten Datenbanksystem kann es sich beispielsweise auch um ein verteiltes Kommunikationssystem zum Datenaustausch handeln. Dies kann beispielsweise ein Netzwerk oder ein Peer-2-Peer Netzwerk sein.

Unter "Datenblock", der insbesondere je nach Kontext und Realisierung auch als "Glied" oder "Block" bezeichnet sein kann, kann im Zusammenhang mit der Erfindung beispielsweise ein Datenblock eines verteilten Datenbanksystems (z. B. eine Blocckette oder eine Peer-to-Peer Datenbank) verstanden werden, die insbesondere als Datenstruktur realisiert ist und vorzugsweise jeweils eine der Transaktionen oder mehrere der Transaktionen umfasst. Bei einer Implementierung kann beispielsweise die Datenbank (oder das Datenbanksystem) ein DLT basiertes System (DLTS) oder eine Blockkette sein und ein Datenblock ein Block der Blockkette oder des DLTS. Ein Datenblock kann beispielsweise Angaben zur Größe (Datengröße in Byte) des Datenblocks, einen Datenblock-Header (engl. Block-header), einen Transaktionszähler und eine oder mehrere Transaktionen umfassen [1]. Der Datenblock-Header kann beispielsweise eine Version, eine Verkettungsprüfsumme, eine Datenblockprüfsumme, einen Zeitstempel, einen Proof-of-Work Nachweis und eine Nonce (Einmalwert, Zufallswert oder Zähler, der für den Proof-of-Work Nachweis verwendet wird) umfassen [1][4][5]. Bei einem Datenblock kann es sich beispielsweise auch nur um einen bestimmten Speicherbereich oder Adressbereich der Gesamtdaten handeln, die in dem verteilten Datenbanksystem gespeichert sind. Damit lassen sich beispielsweise blocklose (engl. blockless) verteilte Datenbanksysteme, wie z. B. die IoT Chain (ITC), IOTA, und Byteball, realisieren. Hierbei werden insbesondere die Funktionalitäten der Blöcke einer Blockkette und der Transaktionen miteinander derart kombiniert, dass z. B. die Transaktionen selbst die Sequenz oder Kette von Transaktionen (des verteilten Datenbanksystems) absichern (also insbesondere sicherheitsgeschützt gespeichert werden). Hierzu können beispielsweise mit einer Verkettungsprüfsumme die Transaktionen selbst miteinander verkettet werden, indem vorzugsweise eine separate Prüfsumme oder die Transaktionsprüfsumme einer oder mehrerer Transaktionen als Verkettungsprüfsumme dient, die beim Speichern einer neuen Transaktion in dem verteilten Datenbanksystem in der entsprechenden neuen Transaktion mit gespeichert wird. In einer solchen Ausführungsform kann ein Datenblock beispielsweise auch eine oder mehrere Transaktionen umfassen, wobei im einfachsten Fall beispielsweise ein Datenblock einer Transaktion entspricht.

Unter "Nonce" kann im Zusammenhang mit der Erfindung beispielsweise eine kryptographische Nonce verstanden werden (Abkürzung für: "used only once"[2] oder "number used once"[3]). Insbesondere bezeichnet eine Nonce einzelne Zahlen- oder eine Buchstabenkombination, die vorzugsweise ein einziges Mal in dem jeweiligen Kontext (z. B. Transaktion, Datenübertragung) verwendet wird.

Unter "vorhergehende Datenblöcke eines (bestimmten) Datenblockes des verteilten Datenbanksystems" kann im Zusammenhang mit der Erfindung beispielsweise der Datenblock des verteilten Datenbanksystems verstanden werden, der insbesondere einem (bestimmten) Datenblock direkt vorhergeht. Alternativ können unter "vorhergehender Datenblöcke eines (bestimmten) Datenblockes des verteilten Datenbanksystems" insbesondere auch alle Datenblöcke des verteilten Datenbanksystems verstanden werden, die dem bestimmten Datenblock vorhergehen. Hierdurch kann beispielsweise die Verkettungsprüfsumme oder die Transaktionsprüfsumme insbesondere nur über das dem bestimmten Datenblock direkt vorhergehenden Datenblock (bzw. deren Transaktionen) oder über alle dem ersten Datenblock vorhergehenden Datenblöcke (bzw. deren Transaktionen) gebildet werden.

Unter einem "Blockketten-Knoten", "Knoten", "Knoten eines verteilten Datenbanksystems" und dergleichen, können im Zusammenhang mit der Erfindung beispielsweise Geräte (z. B. Feldgeräte, Mobiltelefone), Rechner, Smart-Phones, Clients oder Teilnehmer verstanden werden, die Operationen (mit) dem verteilten Datenbanksystem (z. B. eine Blockkette) durchführen [1][4][5]. Solche Knoten können beispielsweise Transaktionen eines verteilten Datenbanksystems bzw. deren Datenblöcke ausführen oder neue Datenblöcke mit neuen Transaktionen in das verteilte Datenbanksystem mittels neuer Datenblöcke einfügen bzw. verketten. Insbesondere kann dieses Validieren und/oder Verketten durch einen vertrauenswürdigen Knoten (z. B. einem Mining Node) oder ausschließlich durch vertrauenswürdige Knoten erfolgen. Bei einem vertrauenswürdigen Knoten handelt es sich beispielsweise um einen Knoten, der über zusätzliche Sicherheitsmaßnahmen verfügt (z. B. Firewalls, Zugangsbeschränkungen zum Knoten oder ähnliches), um eine Manipulation des Knotens zu verhindern. Alternativ oder zusätzlich kann beispielsweise ein vertrauenswürdiger Knoten beim Verketten eines neuen Datenblocks mit dem verteilten Datenbanksystem, eine Knotenprüfsumme (z. B. eine digitale Signatur oder ein Zertifikat) in dem neuen Datenblock speichern. Damit kann insbesondere ein Nachweis bereitgestellt werden, der angibt, dass der entsprechende Datenblock von einem bestimmten Knoten eingefügt wurde bzw. seine Herkunft angibt. Bei den Geräten (z. B. dem entsprechenden Gerät) handelt es sich beispielsweise um Geräte eines technischen Systems und/oder industriellen Anlage und/oder eines Automatisierungsnetzes und/oder einer Fertigungsanlage, die insbesondere auch ein Knoten des verteilten Datenbanksystems sind. Dabei können die Geräte beispielsweise Feldgeräte sein oder Geräte im Internet der Dinge sein, die insbesondere auch ein Knoten des verteilten Datenbanksystems sind. Knoten können beispielsweise auch zumindest einen Prozessor umfassen, um z. B. ihre computerimplementierte Funktionalität auszuführen.

Unter einem "Blockketten-Orakel" und dergleichen können im Zusammenhang mit der Erfindung beispielsweise Knoten, Geräte oder Rechner verstanden werden, die als zuverlässige Datenquellen gelten. Die von als "Blockketten-Orakel" geltenden Knoten erhaltenen Daten werden beispielsweise als richtig oder nicht manipuliert angesehen, weil solche Knoten über ein Sicherheitsmodul verfügen, das beispielsweise mittels Software-Schutzmechanismen (z. B. kryptographische Verfahren), mechanische Schutzeinrichtungen (z. B. ein abschließbares Gehäuse) oder elektrische Schutzeinrichtungen verfügt (z. B. Tamper-Schutz oder ein Schutzsystem, das die Daten des Sicherheitsmoduls bei einer unzulässigen Nutzung/Behandlung des Blockketten-Orakel löscht umfasst). Das Sicherheitsmodul kann dabei beispielsweise kryptographische Schlüssel umfassen, die für die Berechnung der Prüfsummen (z. B. Transaktionsprüfsummen oder Knotenprüfsummen) notwendig sind.

Unter einem "Rechner" oder einem "Gerät" kann im Zusammenhang mit der Erfindung beispielsweise ein Computer(system), ein Client, ein Smart-Phone, ein Gerät oder ein Server, die jeweils außerhalb der Blockkette angeordnet sind bzw. kein Teilnehmer des verteilten Datenbanksystems (z. B. der Blocckette) sind (also keine Operationen mit dem verteilten Datenbanksystem durchführen oder diese nur abfragen, ohne jedoch Transaktionen durchzuführen, Datenblöcke einfügen oder Proof-of-Work-Nachweise berechnen), verstanden werden. Alternativ kann insbesondere auch unter einem Rechner ein Knoten des verteilten Datenbanksystems verstanden werden. Mit anderen Worten kann insbesondere unter einem Gerät ein Knoten des verteilten Datenbanksystems verstanden werden oder auch ein Gerät außerhalb der Blockkette bzw. des verteilten Datenbanksystems verstanden werden. Ein Gerät außerhalb des verteilten Datenbanksystems kann beispielsweise auf die Daten (z. B. Transaktionen oder Steuertransaktionen) des verteilten Datenbanksystems zugreift und/oder von Knoten (z. B. mittels Smart-Contracts und/oder Blockketten-Orakel) angesteuert werden. Wird beispielsweise eine Ansteuerung bzw. Steuerung eines Gerätes (z. B. ein als Knoten ausgebildetes Gerät oder ein Gerät außerhalb des verteilten Datenbanksystems) durch einen Knoten realisiert, kann dies z. B. mittels eines Smart-Contracts erfolgen, der insbesondere in einer Transaktion des verteilten Datenbanksystems gespeichert ist.
[1] Andreas M. Antonopoulos "Mastering Bitcoin: Unlocking Digital Cryptocurrencies", O'Reilly Media, December 2014
[2] Roger M. Needham, Michael D. Schroeder "Using encryption for authentication in large networks of computers" ACM: Communications of the ACM. Band 21, Nr. 12 Dezember 1978,
[3] Ross Anderson "Security Engineering. A Guide to Building Dependable Distributed Systems" Wiley, 2001
[4] Henning Diedrich "Ethereum: Blockchains, Digital Assets, Smart Contracts, Decentralized Autonomous Organizations", CreateSpace Independent Publishing Platform, 2016
[5] "The Ethereum Book Project/Mastering Ethereum" https://github.com/ethereumbook/ethereumbook, Stand 5.10.2017
[6] Leemon Baird "The Swirlds Hashgraph Consensus Algorithm: Fair, Fast, Byzantine Fault Tolerance", Swirlds Tech Report SWIRLDS-TR-2016-01, 31.5.2016
[7] Leemon Baird "Overview of Swirlds Hashgraph", 31.5.2016
[8] Blockchain Oracles https://blockchainhub.net/blockchainoracles/

Die für das vorgeschlagene verteilte Datenbanksystem beschriebenen Ausführungsformen und Merkmale gelten für das vorgeschlagene Verfahren zum Betreiben eines verteilten Datenbanksystems entsprechend.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von Ausführungsformen unter Bezugnahme auf die beigelegten Figuren näher erläutert.
Fig. 1 zeigt eine schematische Darstellung einer Ausführungsform eines Industrieautomatisierungsnetzwerks mit einem verteilten Datenbanksystem;
Fig. 2 zeigt schematisch eine Ausführungsform einer Blockkette;
Fig. 3 zeigt ein Flussdiagramm für ein Verfahren zum Betreiben einer Blockkette; und
Fig. 4 zeigt ein Ablaufdiagramm für ein Verfahren zum Ändern eines Blockketten-Sicherheitsniveaus für die kryptographische Bindung zwischen Dateneinträgen und Teilnehmern.

In den Figuren sind gleiche oder funktionsgleiche Elemente mit denselben Bezugszeichen versehen worden, sofern nichts anderes angegeben ist.

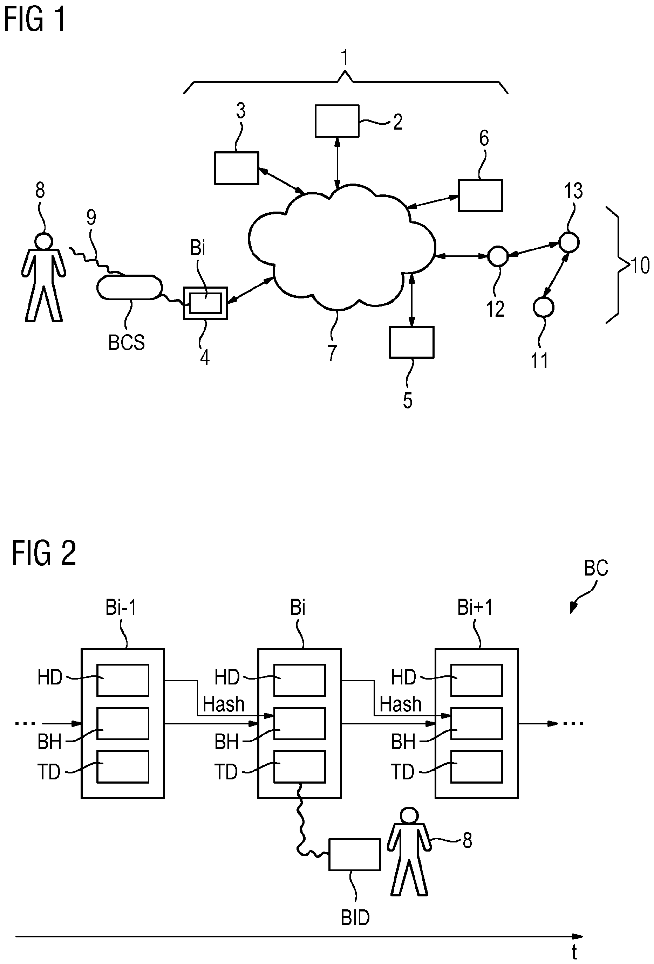

Die Fig. 1 zeigt eine schematische Darstellung einer Ausführungsform eines Industrie-Automatisierungsnetzwerkes, bei dem ein verteiltes Datenbanksystem eingesetzt wird. Dazu ist in der Fig. 1 ein verteiltes Datenbanksystem in der Art einer Blockkette 1 dargestellt, welche in der Fig. 2 näher illustriert ist. Das verteilte Datenbanksystem 1 umfasst dabei miteinander vernetzte Knoten-Einrichtungen 2 - 6.

Die Knoten-Einrichtungen 2 - 6 sind an ein Netzwerk 7 gekoppelt und können grundsätzlich Daten miteinander austauschen.

Als Knoten-Einrichtungen 2 - 6 kommen beispielsweise Rechner mit Blockketten-Clients oder auch Feldgeräte sowie mobile Endgeräte in Frage. In dem dargestellten Ausführungsbeispiel können beispielsweise Sensordaten, die von Feldgeräten 11, 12, 13 eines Industrie-Automatisierungsnetzwerks 10 erzeugt werden, abgespeichert werden. Das Abspeichern erfolgt in der Art von Transaktionen. Beispielsweise kann eine Transaktion für einen Teilnehmer, beispielsweise eine Sensoreinrichtung 11, darin bestehen, einen Sensorwert zu dokumentieren bzw. abzuspeichern. Unter "Teilnehmer" wird im Folgenden jede Entität verstanden, zu der eine zugewiesene Information innerhalb des verteilten Datenbanksystems eingetragen ist.

Analog kann eine Information durch eine Transaktion innerhalb der Blockkette BC abgelegt werden. Die Bindung oder Kopplung 9 der einem Teilnehmer 8 zugewiesenen Information in der Art eines Dateneintrags in der Blockkette an den jeweiligen Teilnehmer 8 erfolgt mit Hilfe eines kryptographischen Blockketten-Sicherheitsverfahrens BCS. Dies ist in der Fig.1 durch die gewellte Linie 9 angedeutet.

In der Fig. 1 ist ein allgemeiner Teilnehmer 8 links dargestellt. Um Transaktionen innerhalb einer Blockkette BC durchzuführen, müssen die Teilnehmer 8 über Blockketten-Identifizierungsdaten BID identifiziert werden. Ein entsprechendes Blockketten-Identifizierungsdatum BID kann z. B. eine Netzwerkadresse sein. Häufig werden auch öffentliche Schlüssel eines Schlüssel-Schloss-Paares als Blockketten-Identifizierungsdatum BID verwendet.

Datenblöcke, die Transaktionen oder Dateneinträge dokumentieren, sind in den Knoteneinrichtungen 2 - 6 abgespeichert. Die kryptographische Kopplung oder Bindung von Dateneinträgen an die Teilnehmer ist beispielsweise bei der bekannten Blockkette Bitcoin über ECDSA-Signaturen modulo einer Primzahl mit 256 Bits implementiert. Man kann dabei von einem Sicherheitsniveau von 256 Bits sprechen. Es ist allerdings fraglich, ob ein solches Sicherheitsniveau auch langfristige Sicherheit für die in der verteilten Datenbank abgelegten Dateneinträge ausreicht. Beispielsweise können der kryptoanalytische Fortschritt und die vergrößerte Leistungsfähigkeit von zukünftigen Rechnern die Lösung solch diskreter Logarithmusprobleme mit einem 256-Modul ermöglichen.

In der Fig. 2 ist schematisch eine Blockkette BC angedeutet. Bei einer Blockkette BC werden Datenblöcke Bi nacheinander erzeugt, wobei die aufeinanderfolgenden Datenblöcke, welche in der Fig. 1 Bi, Bi+1 und Bi-1 bezeichnet sind, kryptographisch miteinander verknüpft sind. Beispielsweise wird der zeitlich in der Fig. 2 aktuellste Datenblock Bi+1, der - wie auch die übrigen vorhergehenden Datenblöcke Bi und Bi-1 - Header-Daten HD, gehashte Datenblockdaten BH und Transaktionsdaten TD umfasst, mit dem vorhergehenden Datenblock Bi verknüpft, indem ein Hashwert des vorhergehenden Datenblocks Bi eingeschrieben ist. Dies ist in der Fig. 2 jeweils durch die geschwungenen Pfeile mit dem Zusatz "Hash" gekennzeichnet. Bei der Hashwertbildung des jeweils vorhergehenden Datenblock gehen alle Daten - insbesondere die Transaktionshistorie der Blockkette BC - ein, so dass eine Manipulation von Daten, insbesondere von Transaktionsdaten, sehr unwahrscheinlich ist.

Bei der Erzeugung eines neuen Datenblocks, der angefragte Transaktionen, wie zum Beispiel Änderungen von Dateneinträgen, dokumentieren soll, prüfen die Knoten-Einrichtungen 2 - 6, die Rechnerkapazität zur Verfügung stellen, ob die anstehenden Transaktionen im Widerspruch zur bisherigen Transaktionshistorie stehen oder nicht. Beispielsweise wird eine Transaktion bestätigt, wenn die Mehrheit der Knoten-Einrichtungen die Transaktion im Hinblick auf die Transaktionshistorie als widerspruchsfrei einstufen.

Das eingesetzte kryptographische Blockketten-Sicherheitsverfahren BCS, welches zum Beispiel durch Kurvenparameter für ein ECDSA festgelegt wird, ist bei dem vorgeschlagenen Betrieb von verteilten Datenbanksystemen bezüglich eines Parameters, der das Sicherheitsniveau bestimmt, änderbar. Dazu wird eine kryptographische Herausforderung, insbesondere innerhalb des verteilten Datenbanksystems in der Art eines Smart-Contracts SC, implementiert. Falls ein Teilnehmer die kryptographische Herausforderung, die in der Art des Blockketten-Sicherheitsverfahrens BCS implementiert ist, löst, erfolgt eine Erhöhung des Sicherheitsniveaus, beispielsweise eine Erhöhung des Modulos bei ECDSA-Signaturen und/oder einer kryptographischen Schlüssellänge. Dadurch kann das Sicherheitsniveau des verteilten Datenbanksystems an den kryptoanalytischen Fortschritt im Stand der Technik angepasst werden.

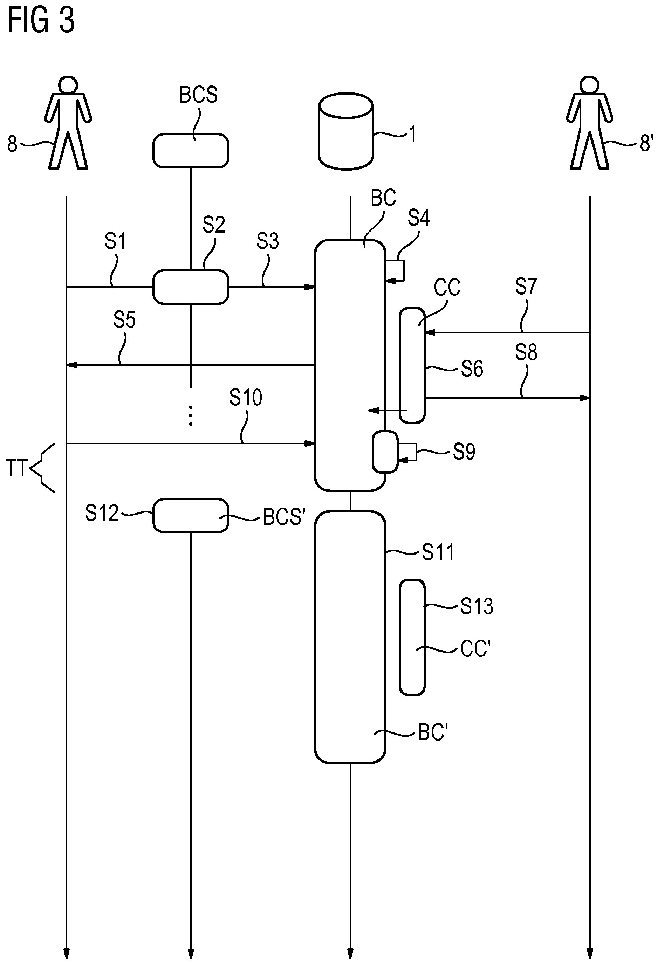

Die Fig. 3 zeigt ein Flussdiagramm für ein mögliches Betriebsverfahren für das in den Fig. 1 und 2 angedeutete verteilte Datenbanksystem 1. In der Fig. 3 sind die Abläufe für mehrere denkbare Instanzen beim Betrieb der Blockkette BC, wie eines Teilnehmers 8, des Blockketten-Sicherheitsverfahrens BCS, der verteilten Datenbank 1 und eines weiteren Teilnehmers 8', angedeutet. Die Zeit t verläuft dabei von oben nach unten.

Im Wesentlichen wird das verteilte Datenbanksystem 1 mit seinen Knoteneinrichtungen 2 - 6 nach einem Blockketten-Algorithmus betrieben. Darin ist vorgesehen, dass bei einer Transaktionsanfrage im Schritt S1 von einem Teilnehmer 8 über einen Knoten 2 - 6 der verteilten Datenbank 1, beispielsweise ein Dateneintrag innerhalb des verteilten Datenbanksystems 1 verändert wird.

Um den Dateneintrag, der beispielsweise über die Blockketten-Identifizierung durch das Blockketten-Identifizierungsdatum BID identifiziert wird, auch dem Teilnehmer 8 zugeordnet werden kann, erfolgt eine kryptographische Bindung oder Kopplung. Dies geschieht im Schritt S2, indem die Transaktionsanfrage mit dem Blockketten-Identifizierungsdatum BID des Teilnehmers 8 mit einer kryptographischen Signatur, beispielsweise einer ECDSA-Signatur, versehen wird.

Die signierte Transaktionsanfrage wird im Schritt S3 von der Blockkette BC bzw. entsprechend implementierten Knoteneinrichtungen 2 - 6 erfasst.

Sofern, wie zu der Fig. 2 erläutert wurde, die Transaktion mit der Blockketten-Historie konform ist, wird im Schritt S4 die Transaktion durch die Knoteneinrichtungen bestätigt. Unter den Knoteneinrichtungen 2 - 6 können sogenannte Miner vorgesehen sein, die bei der Transaktionsbestätigung Rechenleistung bereitstellen und für ihre Abgleichstätigkeit und der Datenblockgenerierung für die Blockkette BC eine Belohnung erhalten. Diese Belohnung erfolgt insbesondere in der Art von einer Kryptowährung, die als verteiltes Kontobuch innerhalb der Blockkette BC verwaltet wird. Durch die Bestätigung der Transaktion ist dem Teilnehmern 8 nun der geänderte Dateneintrag zugewiesen (Schritt S5).

Darüber hinaus wird im Schritt S6 ein Smart-Contract SC bereitgestellt, welcher eine kryptographische Herausforderung CC beinhaltet. Die kryptographische Herausforderung CC besteht beispielsweise in einer kryptographischen Aufgabe, welche auf dem Blockketten-Sicherheitsverfahren BCS beruht. Das Sicherheitsniveau, beispielsweise eine Schlüssellänge oder eine Modulolänge bei der ECDSA-Signatur, ist dabei für die kryptographische Herausforderung CC niedriger als das für den Betrieb der Blockkette BC vorgesehene Blockketten-Sicherheitsniveau BSL. Das Herausforderungs-Sicherheitsniveau CSL hat zum Beispiel eine 200-Bit-Modullänge und besteht aus der Bestimmung eines diskreten Logarithmus für eine elliptische Kurve mit dem 200-Bit-Modul. Das Blockketten-Sicherheitsverfahren BCS besteht dann weiterhin in einem ECDSA auf der Basis einer elliptischen Kurve mit einem 256-Bit-Modul.

Wird nun durch einen weiteren Teilnehmer 8' der Smart-Contract mit der kryptographischen Herausforderung CC im Schritt S7 gelöst, bedeutet dies für den Betrieb der Blocckette BC, dass das Sicherheitsniveau zwar noch ausreicht, weil aber das Herausforderungs-Sicherheitsniveau CSL nur noch um 56 Bits von dem Sicherheitsniveau BSL der Blockkette BC beabstandet ist, muss bei einer zukünftigen Verbesserung des kryptographischen Fortschritts mit einer Manipulation an der verteilten Datenbank 1 gerechnet werden.

Für die Lösung des Smart-Contracts bzw. der kryptographischen Herausforderung erhält der weitere Teilnehmer 8' im Schritt S8 eine Belohnung, wie eine Ressource der Blockkette BC. Dies ist beispielsweise ein bestimmter Betrag einer Kryptowährung. Der Betrag ist dabei insbesondere höher als Knoten-Einrichtungen zugewiesen wird, wenn sie Mining-Aktivitäten vollziehen.

In der Folge wird das Sicherheitsniveau für das Blockketten-Sicherheitsverfahren BCS erhöht. Dies erfolgt im Schritt S9, wobei der Teilnehmer 8 durch eine Transaktions- oder Dateneintragsanfrage einen neuen kryptographischen Schlüssel mit erhöhter Länge bzw. eine ECDSA-Signatur für den weiteren Betrieb der Blockchain BC' erzeugt. Der Austausch des alten Schlüssels für das niedrigere Blockketten-Sicherheitsniveau BSL mit einem neuen Schlüssel, der dem erhöhten Blockketten-Sicherheitsniveau nBSL entspricht, wird in der Austauschanfrage im Schritt S10 als Transaktion angefragt. Im Prozess S9 wird die noch mit dem alten Schlüssel signierte Transaktionsanfrage durchgeführt.

Der Austausch solcher Schlüssel erfolgt nur über einen vorübergehenden Zeitraum TT. Denn dadurch, dass die Sicherheit der alten Schlüssel gemäß dem alten Blockketten-Sicherheitsniveau BSL bedroht ist, muss der Zeitraum, in dem eine Information für den Übergang von einem alten zu einem neuen Schlüssel innerhalb des verteilten Datenbanksystems 1 bekannt ist, begrenzt sein.

In der Folge wird im Schritt S11 der Betrieb der Blockkette BC' auf einem erhöhten neuen Sicherheitsniveau nBSL fortgesetzt.

Im Schritt S12 erfolgt nunmehr eine kryptographische Bindung BCS' der Teilnehmer 8 an ihre Datenbankeinträge in dem verteilten Datenbanksystem 1 über das hinsichtlich des Sicherheitsniveaus verbesserte Blockketten-Sicherheitsverfahren BCS', bei dem nur ECDSA-Signaturen modulo einer Primzahl mit beispielsweise 384 Bits verwendet werden.

Damit auch weiterhin das Sicherheitsniveau der Blockkette BC' angepasst werden kann, wird im Schritt S13 erneut eine weitere kryptographische Herausforderung CC' eingestellt. Die kryptographische Herausforderung CC' hat nun ein Sicherheitsniveau, das beispielsweise zwischen dem der alten Blockkette BC und dem des neuen Blockkettenbetriebs BC' liegt.

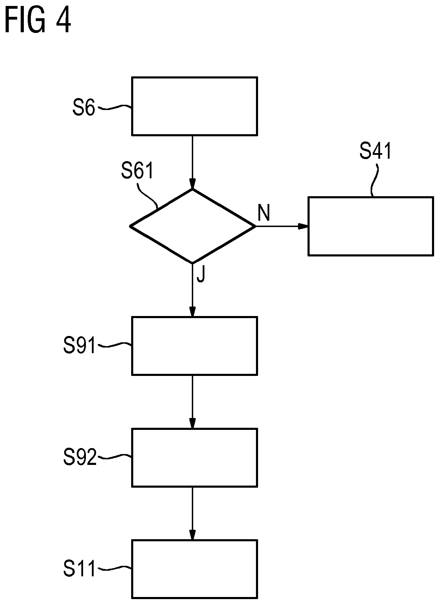

In der Fig. 4 ist ein Ablaufdiagramm für ein Verfahren zum Ändern eines Blockketten-Sicherheitsniveaus BSL für die kryptographische Bindung zwischen Dateneinträgen und Teilnehmern angedeutet. Die in der Fig. 4 gezeigten Verfahrensschritte können im Rahmen des in der Fig. 3 gezeigten Flussdiagramms vollzogen werden.

Im Schritt S6 wird zunächst die kryptographische Herausforderung CC in der Art eines Smart-Contracts bereitgestellt. Während des Betriebs der Blockkette BC erfolgt im Schritt S61 eine Prüfung darüber, ob der Smart-Contract mit der kryptographischen Herausforderung CC erfüllt wurde oder nicht. Falls der Smart-Contract noch offen ist (N), also nicht erfüllt wurde, erfolgt im Schritt S41 ein Weiterbetrieb der Blockkette BC mit dem aktuellen Blockketten-Sicherheitsniveau BSL. Das heißt, die Blockkette arbeitet mit einer kryptographischen Bindung des vorliegenden Sicherheitsniveaus, beispielsweise mit einer vorgegebenen kryptographischen Schlüssellänge für die kryptographische Bindung.

Falls im Schritt S61 erkannt wird, dass der Smart-Contract mit der kryptographischen Herausforderung erfüllt wurde (J), wird in den Folgeschritten das Sicherheitsniveau der Blocckette erhöht.

Im Schritt S91 wird nun eine Transaktionsanfrage von dem oder den Teilnehmern der Blockkette BC an die Blockkette das Datenbanksystem 1 übermittelt. Die Transaktionsanfrage enthält dabei einen neuen Schlüssel gemäß dem neuen Blockketten-Sicherheitsniveau nBSL, das höher ist als das vorherige BSL, und eine Information über den alten Schlüssel, um im Rahmen der Austauschtransaktion die kryptographische Bindung auf das neue Sicherheitsniveau nBSL zu dokumentieren. Diese Austausch-Transaktionsanfrage im Schritt S91 wird noch auf dem alten Sicherheitsniveau BSL vollzogen.

Im Schritt S92 erfolgt die Durchführung bzw. Bestätigung der Austauschtransaktion durch die die Blockkette BC implementierenden Knoteneinrichtungen 2 - 6 des verteilten Datenbanksystems 1.

Anschließend erfolgt im Schritt S11 der Weiterbetrieb der Blockkette BC, wobei jedoch das Sicherheitsniveau nBSL für Transaktionen, und insbesondere die kryptographische Kopplung zwischen Teilnehmern und Datenbankeinträgen erhöht wurde.

Folglich wird durch das vorgeschlagene Verfahren eine Anpassung des kryptographischen Sicherheitsniveaus von verteilten Datenbanksystemen ermöglicht, wobei die Anpassung in Abhängigkeit von dem kryptoanalytischen Fortschritt im Stand der Technik erfolgt. Insgesamt wird dadurch der Betrieb eines verteilten Datenbanksystems, insbesondere einer Blockkette, dauerhaft verbessert, weil der Abstand zwischen dem Blockketten-Sicherheitsniveaus und den Fähigkeiten eines möglichen Angreifers beabstandet gehalten wird.

Bei den vorgeschlagenen Verfahren zum Betreiben verteilter Datenbanksysteme werden insbesondere die zuvor genannten Aspekte im Hinblick auf Blockketten, wie Smart-Contracts, Prüfsummen und dergleichen berücksichtigt. Obwohl die Erfindung anhand einer einfachen Blockkette erläutert wurde, können die zuvor beschriebenen Varianten von Distributed Ledgers genauso mit Hilfe von veränderbaren Sicherheitsniveaus und kryptografischen Herausforderungen innerhalb des Datenbanksystems betrieben werden. Insgesamt wird die Sicherheit und Zuverlässigkeit von Transaktionen verbessert, da kryptoanalytische Angriffe erschwert werden.

## Patentansprüche

1. Verfahren zum Betreiben eines verteilten Datenbanksystems (1) mit verteilten Knoten-Einrichtungen (2 - 6) zum Bereitstellen von miteinander verknüpften Datenblöcken (Bi) in der Art einer Blockkette (BC), welche an Teilnehmer (8) zugewiesene Dateneinträge dokumentieren, wobei eine jeweilige Kopplung (9) zwischen dem Teilnehmer (8) und dem zugewiesenen Dateneintrag mit Hilfe eines kryptographischen Blockketten-Sicherheitsverfahrens (BCS) erfolgt, welches ein kryptographisches Blockketten-Sicherheitsniveau (BSL) hat, mit den Schritten:
Bereitstellen (S6) einer kryptographischen Herausforderung (CC) auf der Basis des Blockketten-Sicherheitsverfahrens (BCS), wobei die kryptographische Herausforderung (CC) ein kryptographisches Herausforderungs-Sicherheitsniveau (CSL) hat, welches niedriger ist als das Blockketten-Sicherheitsniveau (BSL); und
Erhöhen des Blockketten-Sicherheitsniveaus (BSL) auf ein neues Blockketten-Sicherheitsniveau (nBSL), falls eine Lösung der kryptographischen Herausforderung (CC) erkannt wird.

2. Verfahren nach Anspruch 1, wobei das Herausforderungs-Sicherheitsniveau (CSL) und das Blockketten-Sicherheitsniveau (BSL) so beabstandet werden, dass die kryptographische Herausforderung als zum Zeitpunkt der Bereitstellung als ein sicheres Blockketten-Sicherheitsverfahrens (BCS) gilt.

3. Verfahren nach Anspruch 1 oder 2, die kryptographische Herausforderung (CC) in der Art eines Smart-Contracts (SC) für das bzw. in dem verteilten Datenbanksystem (1) bereitgestellt wird.

4. Verfahren nach einem der Ansprüche 1 - 3, wobei bei Erfüllen des Smart-Contracts (CC) durch einen Teilnehmer (8'), dem Teilnehmer (8') eine Ressource in der Art einer Kryptowährung des verteilten Datenbanksystems (1) zugewiesen wird.

5. Verfahren nach Anspruch 4, wobei die Menge der zugewiesenen Ressource größer ist als einer Knoten-Einrichtung (2 - 6) im Rahmen einer Transaktionsbestätigung für einen Mining-Prozess zugewiesen wird.

6. Verfahren nach einem der Ansprüche 1 - 5, wobei das Blockketten-Sicherheitsverfahren (BCS) ein kryptographisches Schlüsselpaar miteinander kryptographisch verknüpft, die jeweiligen Schlüssel dem Blockketten-Sicherheitsniveau (BSL) entsprechen, und wobei jedem Teilnehmer (8) ein geltendes Schlüsselpaar zugeordnet ist.

7. Verfahren nach einem der Ansprüche 1 - 6, wobei das Blockketten-Sicherheitsverfahren (BCS) mit Hilfe eines Signaturverfahrens mit Elliptische-Kurven-Kryptographie (ECC) implementiert ist und das Blockketten-Sicherheitsniveau (BSL) der Schlüssellänge für die ECC, insbesondere als Anzahl der Bits, entspricht.

8. Verfahren nach Anspruch 6 oder 7, wobei das Erhöhen des Blockketten-Sicherheitsniveaus (BSL) umfasst: für einen jeweiligen Teilnehmer (8), Austauschen des geltenden Schlüsselpaars mit einem neuen Schlüsselpaar, welches dem neuen Bloccketten-Sicherheitsniveau (nBSL) entspricht.

9. Verfahren nach einem der Ansprüche 6 - 8, wobei der Austausch eines Schlüssels für einen Teilnehmer (8) zum Erhöhen des Blockketten-Sicherheitsniveaus (BSL) in Art einer Austauschtransaktion (S91, S92) erfolgt, bei der der neue Schlüssel und der alte Schlüssel genannt ist, wobei die zugehörige Austauschtransaktionsanfrage (S91) mit dem aktuellen Schlüssel signiert wird (S92).

10. Verfahren nach Anspruch 9, wobei die Durchführung von Austauschtransaktionen (S91, S2) ausschließlich für einen vorbestimmten Zeitraum (TT) nach dem Erkennen (S61) der Lösung der kryptographischen Herausforderung (CC) erlaubt wird.

11. Verfahren nach einem der Ansprüche 1 - 10, ferner umfassend: Falls das Blockketten-Sicherheitsniveau (BSL) erhöht wurde (S9), Bereitstellen (S13) einer neuen kryptographischen Herausforderung (CC) auf der Basis des Blockketten-Sicherheitsverfahrens (BCS), wobei die neue kryptographische Herausforderung (CC) ein kryptographisches Herausforderungs-Sicherheitsniveau (CSL) hat, welches höher ist als das vorherige Herausforderungs-Sicherheitsniveau (CSL) und/oder des vorherigen Blockketten-Sicherheitsniveaus (BSL).

12. Verfahren nach einem der Ansprüche 1 - 11, wobei ein Dateneintrag für einen Teilnehmer (8) in dem verteilten Datenbanksystem (1) mit Hilfe einer Transaktion erfolgt, jeder Teilnehmer (8) innerhalb des verteilten Datenbanksystems (1) mit Hilfe eines jeweiligen Blockketten-Identifizierungsdatums (BID) eindeutig identifiziert wird, und wobei eine Transaktionsanfrage (S1) für den Teilnehmer (8) zumindest das Bloccketten-Identifizierungsdatum (BID) des Teilnehmers (8) umfasst und mit Hilfe des kryptographischen Blockketten-Sicherheitsverfahrens (BCS) signiert und/oder verschlüsselt wird (S2).

13. Verfahren nach Anspruch 12, wobei die Blockketten-Identifizierungsdaten (BID) von einem öffentlichen kryptographischen Schlüssel ableitbar sind.

14. Verteiltes Datenbanksystem (1) mit mehreren Knoten-Einrichtungen (2 - 6) zum Bereitstellen von miteinander verknüpften Datenblöcken (Bi) in der Art einer Blockkette (BC), wobei jede Knoteneinrichtung (2 - 6) eingerichtet ist, gemäß einem vorgegebenen Blockkettenalgorithmus Dateneinträge vorzunehmen, wobei der Blockkettenalgorithmus die Durchführung eines Verfahrens nach einem der Ansprüche 1 - 12 durch die Knoten-Einrichtungen (2 - 6) veranlasst.

15. Industrieautomatisierungsnetzwerk (10) mit einem verteilten Datenbanksystem (1) nach Anspruch 14 zum Dokumentieren und Steuern von Transaktionen für Feldgeräte (11 - 13)

## Claims

1. Method for operating a distributed database system (1) having distributed node devices (2-6) for providing data blocks (Bi) which are linked to one another in the form of a blockchain (BC) and document data entries allocated to subscribers (8), wherein a respective coupling (9) between the subscriber (8) and the allocated data entry is effected with the aid of a cryptographic blockchain security method (BCS) which has a cryptographic blockchain security level (BSL), having the steps of:
providing (S6) a cryptographic challenge (CC) on the basis of the blockchain security method (BCS), wherein the cryptographic challenge (CC) has a cryptographic challenge security level (CSL) which is lower than the blockchain security level (BSL); and
increasing the blockchain security level (BSL) to a new blockchain security level (nBSL) if a solution to the cryptographic challenge (CC) is detected.

2. Method according to Claim 1, wherein the challenge security level (CSL) and the blockchain security level (BSL) are spaced apart such that the cryptographic challenge is considered to be a secure blockchain security method (BCS) at the time of provision.

3. Method according to Claim 1 or 2, the cryptographic challenge (CC) is provided in the form of a smart contract (SC) for or in the distributed database system (1).

4. Method according to one of Claims 1-3, wherein, if the smart contract (CC) is complied with by a subscriber (8'), a resource in the form of a cryptocurrency of the distributed database system (1) is allocated to the subscriber (8').

5. Method according to Claim 4, wherein the set of allocated resources is greater than that allocated to a node device (2-6) in the context of a transaction confirmation for a mining process.

6. Method according to one of Claims 1-5, wherein the blockchain security method (BCS) cryptographically links a cryptographic key pair to one another, the respective keys correspond to the blockchain security level (BSL), and wherein an applicable key pair is assigned to each subscriber (8).

7. Method according to one of Claims 1-6, wherein the blockchain security method (BCS) is implemented with the aid of a signature method using elliptical curve cryptography (ECC) and the blockchain security level (BSL) corresponds to the key length for the ECC, in particular as a number of bits.

8. Method according to Claim 6 or 7, wherein the operation of increasing the blockchain security level (BSL) comprises: exchanging the applicable key pair with a new key pair, which corresponds to the new blockchain security level (nBSL), for a respective subscriber (8).

9. Method according to one of Claims 6-8, wherein a key for a subscriber (8) is exchanged, for the purpose of increasing the blockchain security level (BSL), in the form of an exchange transaction (S91, S92) in which the new key and the old key are mentioned, wherein the associated exchange transaction request (S91) is a signed (S92) using the current key.

10. Method according to Claim 9, wherein the performance of exchange transactions (S91, S2) is allowed only for a predetermined period (TT) after the solution to the cryptographic challenge (CC) has been detected (S61).

11. Method according to one of Claims 1-10, also comprising: if the blockchain security level (BSL) has been increased (S9), providing (S13) a new cryptographic challenge (CC) on the basis of the blockchain security method (BCS), wherein the new cryptographic challenge (CC) has a cryptographic challenge security level (CSL) which is higher than the previous challenge security level (CSL) and/or the previous blockchain security level (BSL).

12. Method according to one of Claims 1-11, wherein a data entry for a subscriber (8) is made in the distributed database system (1) with the aid of a transaction, each subscriber (8) inside the distributed database system (1) is uniquely identified with the aid of a respective blockchain identification data item (BID), and wherein a transaction request (S1) for the subscriber (8) comprises at least the blockchain identification data item (BID) of the subscriber (8) and is signed and/or encrypted (S2) with the aid of the cryptographic blockchain security method (BCS).

13. Method according to Claim 12, wherein the blockchain identification data (BID) can be derived from a public cryptographic key.

14. Distributed database system (1) having a plurality of node devices (2-6) for providing data blocks (Bi) which are linked to one another in the form of a blockchain (BC), wherein each node device (2-6) is configured to make data entries according to a predefined blockchain algorithm, wherein the blockchain algorithm causes a method according to one of Claims 1-12 to be carried out by the node devices (2-6) .

15. Industrial automation network (10) having a distributed database system (1) according to Claim 14 for documenting and controlling transactions for field devices (11-13).

## Revendications

1. Procédé de fonctionnement d'un système de base de données distribuée (1) avec des dispositifs de nœuds distribués (2 - 6) pour fournir des blocs de données (Bi) associés entre eux à l'instar d'une chaîne de blocs (BC), lesquels documentent des entrées de données affectées à des abonnés (8), un couplage respectif (9) entre l'abonné (8) et l'entrée de données affectée se produisant à l'aide d'un procédé de sécurisation de chaînes de blocs cryptographique (BCS) qui a un niveau de sécurité de chaînes de blocs cryptographique (BSL), comportant les étapes :
- fourniture (S6) d'un défi cryptographique (CC) sur la base du procédé de sécurisation de chaînes de blocs(BCS), le défi cryptographique (CC) ayant un niveau de sécurité de défi cryptographique (CSL) qui est inférieur au niveau de sécurité de chaîne de blocs (BSL) et
- augmentation du niveau de sécurité de chaînes de blocs (BSL) à un nouveau niveau de sécurité de chaînes de blocs (nBSL) si une solution du défi cryptographique (CC) est identifiée.

2. Procédé selon la revendication 1, le niveau de sécurité de défi (CSL) et le niveau de sécurité de chaînes de blocs(BSL) étant espacés de telle sorte que le défi cryptographique est réputé être, au moment de la fourniture, un procédé de sécurisation de chaînes de blocs (BCS) sécurisé.

3. Procédé selon la revendication 1 ou 2, le défi cryptographique (CC) étant fourni à l'instard'un contrat intelligent (SC) pour resp. dans le système de base de données distribué (1).

4. Procédé selon l'une des revendications 1 - 3, lors de l'exécution du contrat intelligent(CC) par un abonné (8'), une ressource du type crypto-monnaie du système de base de données distribué (1) étant affectée à l'abonné (8').

5. Procédé selon la revendication 4, l'ensemble de la ressource affectée étant supérieur à ce qui est affecté à un dispositif de nœud (2 - 6) dans le cadre d'une confirmation de transaction pour un processus d'exploration.

6. Procédé selon l'une des revendications 1 - 5, le procédé de sécurisation de chaînes de blocs (BCS) associant cryptographiquement entre elles une paire de clés cryptographiques, les clés respectives correspondant au niveau de sécurité de chaînes de blocs (BSL) et à chaque abonné (8) étant associée une paire de clés applicable.

7. Procédé selon l'une des revendications 1 - 6, le procédé de sécurisation de chaînes de blocs (BCS) étant implémenté à l'aide d'un procédé de signature avec cryptographie sur les courbes elliptiques (ECC) et le niveau de sécurité de chaînes de blocs (BSL) correspondant à la longueur de clé pour l'ECC, et plus particulièrement au nombre de bits.

8. Procédé selon la revendication 6 ou 7, l'augmentation du niveau de sécurité de chaînes de blocs (BSL) comprenant : pour un abonné respectif (8), échange de la paire de clés applicable par une nouvelle paire de clés qui correspond au niveau de sécurité de chaînes de blocs (nBSL).

9. Procédé selon l'une des revendications 6 - 8, l'échange d'une clé pour un abonné (8) pour augmenter le niveau de sécurité de chaînes de blocs (BSL) ayant lieu à l'instar d'une transaction d'échange (S91, S92) dans laquelle la nouvelle clé et l'ancienne clé sont nommées, la requête de transaction d'échange associée (S91) étant signée (S92) avec la clé actuelle.

10. Procédé selon la revendication 9, l'exécution de transactions d'échange (S91, S2) étant autorisée exclusivement pour une période prédéfinie (TT) après l'identification (S61) de la solution du défi cryptographique (CC).

11. Procédé selon l'une des revendications 1 - 10, comprenant en outre : si le niveau de sécurité de chaînes de blocs (BSL) a été augmenté (S9), fourniture (S13) d'un nouveau défi cryptographique (CC) sur la base du procédé de sécurisation de chaînes de blocs (BCS), le nouveau défi cryptographique (CC) ayant un niveau de sécurité de défi cryptographique (CSL) qui est supérieur au niveau de sécurité de défi précédent (CSL) et/ou au niveau de sécurité de chaînes de blocs précédent (BSL).

12. Procédé selon l'une des revendications 1 - 11, une entrée de données pour un abonné (8) ayant lieu, dans le système de base de données distribué (1), à l'aide d'une transaction, chaque abonné (8) étant identifié univoquement dans le système de base de données distribué (1) à l'aide d'une donnée d'identification de chaîne de blocs respective (BID) et une requête de transaction (S1) pour l'abonné (8) comprenant au moins la donnée d'identification de chaîne de blocs (BID) de l'abonné (8) et étant signée et/ou cryptée (S2) à l'aide du procédé de sécurisation de chaînes de blocs cryptographique (BCS).

13. Procédé selon la revendication 12, les données d'identification de chaîne de blocs (BID) pouvant être dérivées d'une clé cryptographique publique.

14. Système de base de données distribué (1) comportant plusieurs dispositifs de nœuds (2 - 6) pour fournir des blocs de données (Bi) associés entre eux à l'instar d'une chaîne de blocs (BC), chaque dispositif de nœud (2 - 6) étant configuré pour procéder à des entrées de données conformément à un algorithme de chaîne de blocs prédéfini, l'algorithme de chaîne de blocs faisant exécuter un procédé selon l'une des revendications 1 - 12 par les dispositifs de nœuds (2 - 6).

15. Réseau d'automatisation industriel (10) comportant un système de base de données distribué (1) selon la revendication 14 pour documenter et commander des transactions pour appareils de terrain (11 - 13).
